(19) Europäisches Patentamt
European Patent Office
Office européen des brevets

(11) **EP 1 022 254 B1**

(12) **EUROPEAN PATENT SPECIFICATION**

(45) Date of publication and mention
of the grant of the patent:
**03.04.2002 Bulletin 2002/14**

(51) Int Cl.[7]: **C01F 11/32**, C01F 11/24,
B01D 53/14, B01D 53/68

(21) Application number: **99200028.1**

(22) Date of filing: **07.01.1999**

(54) **Method and installation for the recycling of a residue of flue gas cleaning**

Verfahren und Vorrichtung zur Wiederverwendung eines Abgasreinigungsrückstandes

Procédé et dispositif de récuperation d'un résidue d'une unité de purification des gaz d'échappements

(84) Designated Contracting States:
**AT BE CH CY DE DK ES FI FR GB GR IE IT LI LU MC NL PT SE**

(43) Date of publication of application:
**26.07.2000 Bulletin 2000/30**

(73) Proprietor: **Gemeente Amsterdam, Gemeentelijke Dienst Afvalverwerking**
**1045 BA Amsterdam (NL)**

(72) Inventor: **De Vries, Cornelis**
**1035 HJ Amsterdam (NL)**

(74) Representative: **Kupecz, A., Drs. c.s.**
**Octrooibureau Los en Stigter B.V.**
**Weteringschans 96**
**1017 XS Amsterdam (NL)**

(56) References cited:
**EP-A- 0 078 904**       **EP-A- 0 304 412**
**WO-A-94/08699**        **FR-A- 2 720 010**
**NL-C- 1 006 515**       **US-A- 3 920 419**

## Description

The invention relates to a method of recycling a flue gas purification residue which, apart from small amounts of contamination, mainly contains $CaCl_2$, NaCl, $CaSO_4$ and $Na_2SO_4$, which method comprises the following steps:

    (a) mixing the flue gas purification residue with wash water into a $CaCl_2$ slurry;
    (b) filtering the $CaCl_2$ slurry, whereby at least one $CaCl_2$ filtrate stream is produced;
    (c) separating the at least one filtrate stream in a first fraction having a $CaCl_2$ concentration that is lower than a predetermined value, and a second fraction having a $CaCl_2$ concentration that is higher than said predetermined value; and
    (d) admixing the first fraction to the mixture obtained in step (a).

A method of the kind mentioned in the preamble is disclosed in the European patent specification EP-B-0,630,687 and focuses on the treatment of residues containing calcium chloride and originating from effluxions from incineration plants for domestic waste and the like. The known method of separation by means of filtration involves the continuous return of wash water, while removing a precipitate rich in soluble salts.

A disadvantage of the known method is, that the calcium chloride solution obtained is not of commercial quality.

A further disadvantage of the know method is, that no provision is made for the purification of the product stream, so that the product stream will be polluted with heavy metals and possibly with ammonia, sodium, sulphate and calcium sulphate.

FR-A-2,720,010 relates to a method of treating a flue gas purification residue, by mixing the residue with an acid or base, depending upon the acidity of the residue, in order to dissolve the salts present in the starting material, such as $CaCl_2$.

WO-A-94/08699 relates to the treatment of incineration residues and to the purification of incineration emissions. No mention is made of filtering a $CaCl_2$ slurry.

US-A-3,920,419 relates to a method of eliminating ammonia from a liquid containing ammonia.

EP-A-0,304,412 relates to a method of treating incineration residues from a waste incineration plant, in which the alkalinity of the residue is utilized. The recycling of $CaCl_2$ is not disclosed in this publication.

EP-A-0,078,904 relates to a method of recovering $CaCl_2$ in solid form from a waste liquid comprising $CaSO_4$ and $CaCl_2$. However, this method does not involve mixing flue gas purification residue with wash water to form a $CaCl_2$ slurry and filtering the same.

In accordance with the present invention the method of recycling a flue gas purification residue according to the preamble of claim 1 is characterized in that step (a) involves the mixing of the flue gas purification residue with acidic wash water; step (c) involves use of a sequence of sprinklers resulting in said first and second fractions containing different $CaCl_2$ concentrations, wherein the adjustment of the predetermined value of the $CaCl_2$ concentration to a value is such that step (d), when admixing the first fraction to the mixture of flue gas purification residue and acidic wash water resulting from step (a), yields a saturated (>20%) $CaCl_2$ slurry. .

The second fraction becoming available in accordance with the invention is then suitable to be further utilized.

A particular advantage of the method according to the present invention is that acid (waste) that may be produced elsewhere in the process can be used, thereby eliminating the need of external raw materials for the neutralization. This is an extra saving in material and expenses.

The slurry may contain ammonia which, because of its stench (MAC value = 25 ppm), is considered undesirable. In addition, if the slurry is recycled further, the ammonia could cause corrosion of copper equipment (for example, copper condensers in $CaCl_2$ recycling plants).

According to one feature of the present invention the fraction obtained from step (c), having a higher $CaCl_2$ concentration than a predetermined value, is reduced by evaporation. The $CaCl_2$ can be reused.

To eliminate the ammonia, the steam-stripping technique can be applied. However, the disadvantage of steam stripping the slurry is, that the water content in the filtrate increases due to the condensation of the steam. This results in the filtrate will having a different composition and viscosity.

Another feature according to the present invention proposes to eliminate the ammonia from the $CaCl_2$ slurry by means of aeration. This technique gives optimal results if the pH of the slurry is higher than 8.3.

According to another feature of the present invention, the $CaCl_2$ filtrate is also aerated after the $CaCl_2$ slurry has been filtered. For optimal efficacy, the pH should again be higher than 8.3.

In an alternative embodiment the ammonia is eliminated from the $CaCl_2$ by means of air stripping.

According to yet another feature of the present invention the at least one $CaCl_2$ filtration stream is subjected to the following steps:

-    neutralization;
-    reduction;
-    addition of a flocculant; and
-    allowing the precipitate to settle.

Reduction may take place by adding, for example, $Na_2S$. By this means the heavy metals are eliminated from the $CaCl_2$ filtrate. Heavy metals may also be eliminated with the aid of an ion exchanger. However, this method is not always equally effective at high levels of heavy metal concentrations.

According to another feature of the present invention, mixing the flue gas purification residue with acidic wash water takes place at a temperature of 60-80°C, preferably at a temperature of 65-70°C. At temperatures higher than room temperature the salts dissolve better in the wash water, and in addition, the ammonia evaporates more quickly.

According to yet another feature of the present invention, the $CaCl_2$ slurry is filtered with the aid of under-pressure. Preferably an under-pressure of between 0.2 and 0.4 bar absolute is applied. This provides an optimal compromis between a relatively high and a relatively low vacuum. If too high a vacuum is applied (for example 0.1 bar absolute), a moisture-content gradient will develop in the cake. This may result in the formation of cracks in the cake, which has an adverse effect on washing, and may result in possible later washing steps requiring more time. In addition, the adjustment to a high vacuum involves a greater expenditure and energy consumption. Too low a vacuum, however, results in the filtration times being too long.

The present invention also relates to an installation for recycling a flue gas purification residue which, in addition to small amounts of contamination, mainly contains $CaCl_2$, NaCl, $CaSO_4$ and $Na_2SO_4$, characterized in that said installation comprises at least one first mixing vat for mixing the flue gas purification residue with acidic wash water and filtrate return, which mixing vat is provided with an aeration in and outlet, succeeded in the process flow by at least one first wash sequence, including a vacuum band filter and at least two nozzles and at least two discharge pipes.

The use of a vacuum band filter makes it possible to efficiently recycle flue gas purification residue.

According to another feature of the present invention, the first wash sequence in the process flow is followed by a second mixing vat and wash sequence. Incorporating a second mixing vat and wash sequence in, in addition to, or after the installation, allows the alkalinity of the flue gas purification residue, that is to say the $Ca(OH)_2$, to be reused. Also, a filter cake is obtained that may be reused, incinerated, or dumped.

The following reaction takes place:

$$Ca(OH)_2 + Na_2SO_4 \rightarrow CaSO_4 \downarrow + 2NaOH.$$

The $Ca(OH)_2$ from the filter cake reacts with $Na_2SO_4$ from the wash water to form $CaSO_4$ (remains in the cake) and NaOH. The NaOH can be reused elsewhere, thus providing a saving in NaOH.

According to yet another feature of the present invention the vacuum band filter has a pore size of at least 16 μm which, compared with an embodiment using a smaller pore size, has the advantage of a relatively short filter time yielding a relatively large quantity of filtrate.

The present invention will now be explained in more detail with reference to a figure, schematically illustrating the installation according to the invention.

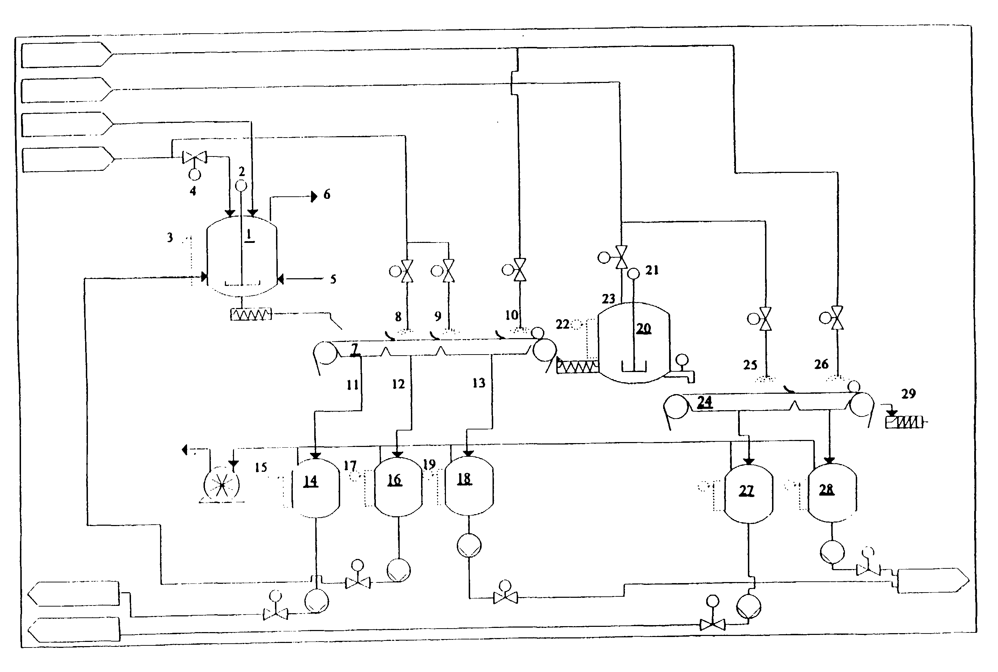

The figure shows a mixing vat 1, equipped with a stirring device 2 and a hypsometer 3. Wash water is introduced via a valve 4 and air is introduced via air inlet 5. The air can be discharged again via outlet 6.

The mixing vat is in the process flow in communication with a vacuum band filter 7 which is provided with sprinklers 8, 9 and 10 and discharge pipes 11, 12 and 13. The discharge pipes 11, 12 and 13 open into buffer vats 14, 16 and 18 respectively, which are provided with hypsometers 15, 17 and 19. The buffer vats 14, 16 and 18 have a in the process flow decreasing concentration of $CaCl_2$ filtrate (buffer vat 14, 16 and 18 containing 25%, 20% and 2% $CaCl_2$ respectively). The $CaCl_2$ filtrate from buffer vat 14 is pumped to an evaporator (not shown). The filtrate from buffer vat 16 is returned by means of a pump to the reaction vessel 1. The content of buffer vat 18 is discharged for further treatment.

The vacuum band filter 7 is followed in process flow by a mixing vat 20, equipped with a stirring device 21 and a hypsometer 22. A sprinkler 23 provides the mixing vat 20 with wash water. The mixing vat 20 is followed in process flow by a vacuum band filter 24, provided with sprinklers 25 and 26 and discharge pipes to the buffer vats 27 and 28. The filtrate from buffer vat 27 can be used for the recovery of NaOH. The filtrate from buffer vat 28 may be subjected to further treatment. The cake residue from the vacuum band filter 24 is discharged into a receptacle 29 and may be reused, incinerated, or dumped.

The present invention will now be further explained with reference to an embodiment on laboratory scale.

In the first mixing vat the mixing ratio is as follows: 1 l acidic wash water (pH ≤ 1), 750 g flue gas purification residue and 0.7 l filtrate return. This produces a slurry of 2 l (L/S = 2.25). The following process takes place on the first vacuum band filter:

(1) the slurry is filtered for 3½ minutes, on a filter surface of 4.54 $dm^2$ having a pore size of 16 μm, and at a vacuum of 0.3 bar absolute. The filtrate comprises approx. 25% $CaCl_2$ and is collected separately and subjected to further treatment;

(2) the residue obtained after filtering is washed for 10 minutes with approx. 0.7 l acidic was water. The filtrate's $CaCl_2$ concentration is slightly lower and this filtrate is returned to the mixing vat;

(3) the residue is subsequently washed for 17½ minutes with 3 l acidic wash water. The filtrate is a slightly acidic (pH 3) solution;

(4) the residue is washed for 5 minutes with approx. 2 l slightly acidic wash water (pH 4). The filtrate is a basic (pH 11) solution. The filtrate from the steps 3 and 4 may be collected together.

In a second mixing vat (CSTR, Continuous Stear Tank Reactor) the residue from the first vacuum band filter is mixed with neutral wash water (pH 7). Approx. 7 l wash water is mixed with 1.2 kg wet cake (dry matter is approx. 30%, L/S = 18). The retention time in the second mixing vat is approx. 15 minutes.

After mixing, the slurry is metered out onto the second vacuum band filter, and 4 l slurry is filtered for 11 minutes. The filtrate is a basic solution (pH 11) which is collected separately. The cake is subsequently washed for 5 minutes with approx. 2 l slightly acidic wash water (pH 4). The filtrate is a basic solution (pH 11), which is collected separately. The residue may be dumped or incinerated.

The various filtrates are stored in buffer vats.

Elimination of heavy metals from the filtrate of step (1) takes place in the following manner:

- neutralization to pH 9.3, with the aid of 30% by weight of HCl solution. On average 7 ml of HCl solution are added to one litre $CaCl_2$ solution;
- reduction of the redox potential to -440 mV with the aid of 12% $Na_2S$. On average 5 ml $Na_2S$ is added to one litre $CaCl_2$;
- adding the flocculation agent;
- after stirring, the flocks are allowed to precipitate, and optionally $BaCl_2$ is added to precipitate the sulphate ions in the solution. The purified 25% $CaCl_2$ solution is then evaporated to yield a saturated, approx. 40% $CaCl_2$ solution. During the evaporation process the remaining ammonia is also evaporated and less soluble components, such as NaCl and $CaSO_4$, precipitate. After drawing off the clear solution, a $CaCl_2$ product of commercial quality is obtained.

## Claims

1. A method of recycling a flue gas purification residue which, apart from small amounts of contamination, mainly contains $CaCl_2$, NaCl, $CaSO_4$ and $Na_2SO_4$, which method comprises the following steps:

    (a) mixing the flue gas purification residue with wash water into a $CaCl_2$ slurry;
    (b) filtering the $CaCl_2$ slurry, whereby at least one $CaCl_2$ filtrate stream is produced;
    (c) separating the at least one filtrate stream in a first fraction having a $CaCl_2$ concentration that is lower than a predetermined value, and a second fraction having a $CaCl_2$ concentration that is higher than said predetermined value; and
    (d) admixing the first fraction to the mixture obtained in step (a), **characterized in that** step (a) involves the mixing of the flue gas purification residue with acidic wash water; step (c) involves use of a sequence of sprinklers resulting in said first and second fractions containing different $CaCl_2$ concentrations, wherein the adjustment of the predetermined value of the $CaCl_2$ concentration to a value is such that step (d), when admixing the first fraction to the mixture of flue gas purification residue and acidic wash water resulting from step (a), yields a saturated (>20%) $CaCl_2$ slurry.

2. A method according to claim 1, **characterized in that** the second fraction obtained from step (c), having a higher $CaCl_2$ concentration than a predetermined value, is reduced by evaporation.

3. A method according to claim 1 or 2, **characterized in that** the $CaCl_2$ slurry is aerated.

4. A method according to claim 1, 2 or 3, **characterized in that** the $CaCl_2$ filtrate is aerated after the $CaCl_2$ slurry has been filtered.

5. A method according to claim 3 or 4, **characterized in that** during aeration the pH of the slurry is higher than 8.3.

6. A method according to claim 1, **characterized in that** the $CaCl_2$ slurry is subjected to a treatment of air stripping.

7. A method according to claim 6, **characterized in that** during air stripping the $CaCl_2$ slurry and the $CaCl_2$ filtrate are stirred.

8. A method according to one of the preceding claims, **characterized in that** the at least one $CaCl_2$ filtration stream is subjected to the following steps:

    - neutralization;
    - reduction;
    - addition of a flocculant; and
    - allowing the precipitation to settle.

9. A method according to one of the preceding claims, **characterized in that** mixing the flue gas purification residue with acidic wash water takes place at a temperature of 60-80°C.

10. A method according to one of the preceding claims, **characterized in that** mixing the flue gas purification residue with acidic wash water takes place at a temperature of 65-70°C.

11. A method according to one of the preceding claims, **characterized in that** filtering takes place with the aid of under-pressure.

**12.** A method according to claim 11, **characterized in that** the under-pressure is between 0.2 and 0.4 bar absolute.

**13.** An installation for recycling a flue gas purification residue which, in addition to small amounts of contamination, mainly contains $CaCl_2$, $NaCl$, $CaSO_4$ and $Na_2SO_4$, **characterized in that** said installation comprises at least one first mixing vat (1) for mixing the flue gas purification residue with acidic wash water and filtrate return, which mixing vat (1) is provided with an aeration in and outlet (5, 6), succeeded in the process flow by at least one first wash sequence, including a vacuum band filter (7) and at least two nozzles (8, 9) and at least two discharge pipes (11, 12).

**14.** An installation according to claim 13, **characterized in that** the first mixing vat (1) is provided with a discharge pipe to an evaporator.

**15.** An installation according to claim 13 or 14, **characterized in that** the first wash sequence is followed by a second mixing vat (20) and wash sequence.

**16.** An installation according to claim 13, 14 or 15, **characterized in that** the vacuum band filter (7, 24) has a pore size of at least 16 $\mu$m.

**Patentansprüche**

**1.** Verfahren zur Wiederverwendung eines Abgasreinigungsrückstandes, der neben geringen Mengen an Verunreinigungen in der Hauptsache $CaCl_2$, NaCl, $CaSO_4$ und $Na_2SO_4$ enthält, wobei das Verfahren folgende Stufen umfaßt:

a) Mischen des Abgasreinigungsrückstandes mit Waschwasser zu einer $CaCl_2$-Aufschlämmung,
b) Filtrieren der $CaCl_2$-Aufschlämmung, wodurch zumindest ein $CaCl_2$-Filtratstrom erzeugt wird,
c) Auftrennen wenigstens eines Filtratstroms in eine erste Fraktion, die eine $CaCl_2$-Konzentration aufweist, die einen vorgegebenen Wert unterschreitet, und in eine zweite Fraktion, die eine $CaCl_2$-Konzentration aufweist, welche den vorgegebenen Wert überschreitet, und
d) Mischen der ersten Fraktion mit dem auf Stufe a) erhaltenen Gemisch, **dadurch gekennzeichnet, daß** die Stufe a) das Mischen des Abgasreinigungsrückstandes mit saurem Waschwasser umfaßt, und die Stufe c) den Einsatz einer Abfolge von Brausen umfaßt, was zur ersten und zweiten Fraktion führt, die unterschiedliche $CaCl_2$-Konzentrationen aufwei-

sen, wobei die Einstellung des vorgegebenen Werts der $CaCl_2$-Konzentration auf einen Wert so gewählt wird, daß die Stufe d) beim Mischen der ersten Fraktion mit dem Gemisch aus Abgasreinigungsrückstand und saurem Waschwasser von Stufe a) zu einer gesättigten (>20%) $CaCl_2$-Aufschlämmung führt.

**2.** Verfahren nach Anspruch 1, **dadurch gekennzeichnet, daß** die auf Stufe c) erhaltene zweite Fraktion, die eine höhere $CaCl_2$-Konzentration aufweist, als dem vorgegebenem Wert entspricht, durch Verdampfen eingeengt wird.

**3.** Verfahren nach Anspruch 1 oder 2, **dadurch gekennzeichnet, daß** die $CaCl_2$-Aufschlämmung belüftet wird.

**4.** Verfahren nach Anspruch 2 oder 3, **dadurch gekennzeichnet, daß** das $CaCl_2$-Filtrat nach der Filtration der $CaCl_2$-Aufschlämmung belüftet wird.

**5.** Verfahren nach Anspruch 3 oder 4, **dadurch gekennzeichnet, daß** während der Belüftung der pH der Aufschlämmung über 8,3 liegt.

**6.** Verfahren nach Anspruch 1, **dadurch gekennzeichnet, daß** die $CaCl_2$-Aufschlämmung einer Behandlung durch Luftstripping unterworfen wird.

**7.** Verfahren nach Anspruch 6, **dadurch gekennzeichnet, daß** während des Luftstrippings die $CaCl_2$-Aufschlämmung und das $CaCl_2$-Filtrat gerührt werden.

**8.** Verfahren nach einem der vorhergehenden Ansprüche, **dadurch gekennzeichnet, daß** wenigstens ein $CaCl_2$-Filtratstrom den folgenden Behandlungsstufen unterworfen wird:

- Neutralisation,
- Reduktion,
- Zugabe eines Flockungsmittels und
- Absetzenlassen des Präzipitats.

**9.** Verfahren nach einem der vorhergehenden Ansprüche, **dadurch gekennzeichnet, daß** das Mischen des Abgasreinigungsrückstandes mit dem sauren Waschwaser bei einer Temperatur von 60 - 80°C erfolgt.

**10.** Verfahren nach einem der vorhergehenden Ansprüche, **dadurch gekennzeichnet, daß** das Mischen des Abgasreinigungsrückstandes mit dem sauren Waschwaser bei einer Temperatur von 65 - 70°C erfolgt.

**11.** Verfahren nach einem der vorhergehenden Ansprüche, **dadurch gekennzeichnet, daß** die Filtration unter Unterdruck durchgeführt wird.

**12.** Verfahren nach Anspruch 11, **dadurch gekennzeichnet, daß** der Unterdruck 0,2 - 0,4 bar abs. beträgt.

**13.** Vorrichtung zur Wiederverwendung eines Abgasreinigungsrückstandes, der neben geringen Mengen an Verunreinigungen in der Hauptsache $CaCl_2$, NaCl, $CaSO_4$ und $Na_2SO_4$ enthält, **dadurch gekennzeichnet, daß** die Vorrichtung wenigstens einen ersten Anmachbottich (1) zum Mischen des Abgasreinigungsrückstandes mit saurem Waschwasser und Filtratrücklauf umfaßt, wobei der Anmachbottich (1) mit einer Be- und Entlüftung (5,6) ausgestattet ist, gefolgt im weiteren Prozeßablauf von wenigstens einer ersten Waschsequenz, die einen Vakuumbandfilter (7) und wenigstens zwei Düsen (8,9) und wenigstens zwei Ableitungsrohre (11, 12) umfaßt.

**14.** Vorrichtung nach Anspruch 13, **dadurch gekennzeichnet, daß** der erste Anmachbottich (1) mit einem Ableitungsrohr zu einem Verdampfer ausgestattet ist.

**15.** Vorrichtung nach Anspruch 13 oder 14, **dadurch gekennzeichnet, daß** auf die erste Waschsequenz ein zweiter Anmachbottich (20) und eine zweite Waschsequenz folgen.

**16.** Vorrichtung nach Anspruch 13, 14 oder 15, **dadurch gekennzeichnet, daß** der Vakuumbandfilter (7, 24) eine Porengröße von wenigstens 16 μm aufweist.

**Revendications**

**1.** Procédé de recyclage d'un résidu de purification de rejet gazeux qui, à l'exception de faibles quantités de contamination, contient principalement $CaCl_2$, NaCl, $CaSO_4$ et $Na_2SO_4$, ladite méthode comprenant les étapes suivantes :

(a) mélanger le résidu de purification de rejets gazeux avec de l'eau de lavage sous la forme d'une barbotine de $CaCl_2$ ;
(b) filtration de la barbotine de $CaCl_2$ par laquelle au moins un courant de filtrat de $CaCl_2$ est produit ;
(c) séparation de l'au moins un courant de filtrat en une première fraction ayant une concentration en $CaCl_2$ qui est plus basse qu'une valeur prédéterminée et une seconde fraction ayant une concentration en $CaCl_2$ qui est supérieure à ladite valeur prédéterminée ;

et

(d) mélanger la première fraction au mélange obtenu à l'étape (a),

**caractérisé en ce que** l'étape (a) comprend le mélange du résidu de purification de rejet gazeux avec de l'eau de lavage acide ; l'étape (c) comporte l'utilisation d'une séquence de dispositifs d'aspersion permettant d'obtenir lesdites première et seconde fractions contenant des concentrations différentes de $CaCl_2$, dans laquelle l'ajustement de la valeur prédéterminée de la concentration en $CaCl_2$ à une valeur est tel que, l'étape (d), lorsqu'on admet la première fraction dans le mélange de résidu de purification de rejet gazeux et de l'eau de lavage acide résultant de l'étape (a), produit une barbotine saturée en $CaCl_2$ (>20 %).

**2.** Procédé suivant la revendication 1, **caractérisé en ce que** la seconde fraction obtenue à l'étape (c), ayant une concentration plus élevée en $CaCl_2$ que la valeur prédéterminée, est réduite par évaporation.

**3.** Procédé suivant la revendication 1 ou 2, **caractérisé en ce que** la barbotine de $CaCl_2$ est aérée.

**4.** Procédé suivant la revendication 1, 2 ou 3, **caractérisé en ce que** le filtrat de $CaCl_2$ est aéré après que la barbotine de $CaCl_2$ a été filtrée.

**5.** Procédé suivant la revendication 3 ou 4, **caractérisé en ce que**, pendant l'aération, le pH de la barbotine est plus élevé que 8,3.

**6.** Procédé suivant la revendication 1, **caractérisé en ce que** la barbotine de $CaCl_2$ est soumise à un traitement d'extraction par de l'air.

**7.** Procédé suivant la revendication 6, **caractérisé en ce que**, pendant l'extraction à l'air, la barbotine de $CaCl_2$ et le filtrat de $CaCl_2$ sont agités.

**8.** Procédé suivant l'une des revendications précédentes, **caractérisé en ce que** l'au moins un courant de filtration de $CaCl_2$ est soumis aux étapes suivantes :

- neutralisation ;
- réduction ;
- addition d'un floculant ; et
- étape au cours de laquelle on laisse la précipitation se déposer.

**9.** Procédé suivant l'une des revendications précédentes, **caractérisé en ce que** le mélange de résidu de purification de rejet gazeux avec de l'eau de lavage acide a lieu à une température de 60°C à 80°C.

**10.** Procédé suivant l'une des revendications précédentes, **caractérisé en ce que** le mélange de résidu de purification de rejet gazeux avec de l'eau de lavage acide a lieu à une température de 65°C à 70°C.

**11.** Procédé suivant l'une des revendications précédentes, **caractérisé en ce que** la filtration a lieu à l'aide d'une dépression.

**12.** Procédé suivant la revendication 11, **caractérisé en ce que** la dépression est comprise entre 0,2 et 0,4 bar absolu.

**13.** Installation pour le recyclage d'un résidu de purification de rejet gazeux qui, en plus de petites quantités de contamination, contient principalement $CaCl_2$, NaCl, $CaSO_4$ et $Na_2SO_4$, **caractérisée en ce que** ladite installation comprend au moins un premier bac de mélange (1) pour mélanger le résidu de purification de rejet gazeux avec l'eau de lavage acide et le retour de filtrat, lequel bac de mélange (1) est muni d'une aération pour l'entrée et la sortie d'air (5, 6) suivie, dans le déroulement du procédé, par au moins une première séquence de lavage, incluant un filtre à bande sous vide et au moins deux tuyères (8, 9) et au moins deux tuyaux de décharge (11, 12).

**14.** Installation suivant la revendication 13, **caractérisée en ce que** le premier bac de mélange (1) est muni d'un tuyau de décharge vers un évaporateur.

**15.** Installation suivant la revendication 13 ou 14, **caractérisée en ce que** la première séquence de lavage est suivie par une seconde séquence de mélange dans le bac (20) et de lavage.

**16.** Installation suivant la revendication 13, 14 ou 15, **caractérisée en ce que** le filtre à bande (7, 24) a une taille de porosité d'au moins 16 micromètres.